(19) Europäisches Patentamt
European Patent Office
Office européen des brevets

(11) **EP 4 367 561 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **22734564.2**

(22) Anmeldetag: **14.06.2022**

(51) Internationale Patentklassifikation (IPC):
**G05B 19/404** *(2006.01)* **B23Q 15/18** *(2006.01)*
**G05B 19/416** *(2006.01)*

(52) Gemeinsame Patentklassifikation (CPC):
**G05B 19/404; B23Q 15/18;** G05B 19/4166;
G05B 2219/49186

(86) Internationale Anmeldenummer:
**PCT/EP2022/066136**

(87) Internationale Veröffentlichungsnummer:
**WO 2023/280529 (12.01.2023 Gazette 2023/02)**

(54) **VERFAHREN ZUR KOMPENSATION EINER ABDRÄNGUNG EINES WERKZEUGS BEI EINER BEARBEITUNG EINES WERKSTÜCKS SOWIE WERKZEUGMASCHINE HIERZU**

METHOD FOR COMPENSATING FOR DEFLECTION OF A TOOL DURING MACHINING OF A WORKPIECE, AND MACHINE TOOL THEREFOR

PROCÉDÉ DE COMPENSATION DE LA DÉVIATION D'UN OUTIL LORS DE L'USINAGE D'UNE PIÈCE, ET MACHINE-OUTIL ASSOCIÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2021 DE 102021117499**

(43) Veröffentlichungstag der Anmeldung:
**15.05.2024 Patentblatt 2024/20**

(73) Patentinhaber: **P&L GmbH & Co. Kg**
**29614 Soltau (DE)**

(72) Erfinder: **RÖDERS, Jürgen**
**29614 Soltau (DE)**

(74) Vertreter: **Hoefer & Partner Patentanwälte mbB**
**Pilgersheimer Straße 20**
**81543 München (DE)**

(56) Entgegenhaltungen:
WO-A1-2013/043102     DE-A1- 102017 206 931
DE-A1- 102020 131 696     DE-T5- 112019 002 459

**Beschreibung**

Die Erfindung betrifft ein Verfahren zur Kompensation einer Abdrängung eines Werkzeugs bei einer Bearbeitung eines Werkstücks mit dem Werkzeug sowie eine zur Ausführung des Verfahrens eingerichtete Werkzeugmaschine für hochgenaue Bearbeitungen.

Die Genauigkeitsanforderungen an die Bearbeitungsergebnisse in zerspanenden Fräs- und Schleifmaschinen steigen immer weiter an. Üblicherweise werden für eine Bearbeitung eines Werkstücks an einer Spindel Werkzeuge gelagert, die für den Bearbeitungsprozess in Rotation versetzt werden. Während der Bearbeitung entstehen zwischen Werkstück und Werkzeug die Zerspanungsprozesskräfte. Diese führen zu einer Abdrängung des Fräs- oder Schleifwerkzeugs, und in der Folge zu unerwünschten Ungenauigkeiten am hergestellten Werkstück. Besonders gravierend ist dieser Effekt bei Bearbeitungsaufgaben, bei denen eine Umfangsbearbeitung eines Werkstücks ausgeführt wird und das Werkzeug insbesondere einen relativ schlanken Schaft hat. Hier kann es zu sehr großen Abdrängungen des Werkzeugs und entsprechend großen Maßabweichungen am fertiggestellten Werkstück kommen.

Wenn eine Abdrängung des Werkzeugs beispielsweise durch Versuche bekannt ist, kann die Abdrängung kompensiert werden, indem eine Werkzeugbahn des Werkzeugs um das Maß der Abdrängung in Richtung des Werkstücks korrigiert wird. Dies funktioniert gut bei geraden Abschnitten des Werkstücks. Sobald jedoch nicht gerade Abschnitte, beispielsweise bei einer Umfangsbearbeitung mit Außenradien und Innenradien vorhanden sind, führt diese Kompensation immer noch zu ungenauen Bearbeitungsergebnissen am Werkstück.

Die DE 10 2020 131 696 A1 beschreibt eine numerische Steuervorrichtung mit einer Berechnungseinheit, die eine Werkzeugmaschine veranlasst, das Zerspanen mit einem Befehlskoordinatenwert durchzuführen, der durch einen von einer Befehlsanalyseeinheit empfangenen Zerspanungsbefehl angezeigt wird, wobei die Berechnungseinheit für dynamische Kompensationsparameter nur den dynamischen Fehler aus einem Vergleich der Befehlsform und der Messdaten erfasst und den dynamischen Kompensationsparameter aus dem erfassten dynamischen Fehler berechnet.

Die DE 11 2019 002 459 T5 beschreibt ein Verfahren zum Bearbeiten eines Werkstücks mit einem Werkzeug umfassend das Halten des Werkstücks, das Halten des Werkzeugs und das Bewegen des gehaltenen Werkzeugs relativ zum gehaltenen Werkstück in Übereinstimmung mit einem NC-Programm, das einen arithmetischen Ausdruck zur Berechnung einer Position des gehaltenen Werkzeugs enthält.

Es ist daher Aufgabe der vorliegenden Erfindung ein Verfahren zur Kompensation einer Abdrängung eines Werkzeugs bei einer Bearbeitung eines Werkstücks bereitzustellen, welches einfach und kostengünstig durchführbar ist sowie eine hochgenaue Bearbeitung des Werkstücks ermöglicht. Ferner ist es Aufgabe der Erfindung, eine Werkzeugmaschine bereitzustellen, eingerichtet zur Ausführung des erfindungsgemäßen Verfahrens.

Diese Aufgabe wird durch ein Verfahren mit den Merkmalen des Anspruchs 1 und eine Werkzeugmaschine mit den Merkmalen des Anspruchs 15 gelöst. Die Unteransprüche zeigen jeweils bevorzugte Weiterbildungen der Erfindung.

Das erfindungsgemäße Verfahren mit den Merkmalen des Anspruchs 1 weist den Vorteil auf, dass eine exakte Kompensation einer Abdrängung eines Werkzeugs bei einer Bearbeitung eines Werkstücks mit dem Werkzeug möglich ist. Das Werkzeug ist vorzugsweise ein Fräswerkzeug oder ein Schleifwerkzeug. Die Bearbeitung erfolgt mittels einer Werkzeugmaschine, wobei eine Steuereinheit der Werkzeugmaschine die Kompensation der Abdrängung in Abhängigkeit eines Maßes E von Eingriffsverhältnissen in einem Berührpunkt zwischen Werkzeug und Werkstück an geraden Abschnitten, Innenradien und Außenradien des Werkstücks unterschiedlich ausführt. Der Berührpunkt zwischen Werkzeug und Werkstück ist dabei als der Punkt definiert, an dem eine Gerade senkrecht zur Werkstückoberfläche eine Mittelachse des Werkzeugs schneidet. Das Maß E wird dabei basierend auf einem Verhältnis eines Werkzeugradius R1 zu einem Krümmungsradius R2 des Werkstücks gemäß der Formel

$$E = R1 / R2$$

bestimmt und/oder basierend auf einem Verhältnis einer aktuellen Eingriffslänge L des Werkzeugs in Umfangsrichtung im Werkstück zu einer Eingriffslänge LG des Werkzeugs in Umfangsrichtung im Werkstück bei einer Bearbeitung eines geraden Abschnitts des Werkstücks gemäß der Formel

$$E = L / LG$$

bestimmt.

Somit kann die Kompensation basierend auf einem Verhältnis des Werkzeugradius R1 zum Krümmungsradius R2 und/oder basierend auf einem Verhältnis der aktuellen Eingriffslänge L zur Eingriffslänge LG bei geraden Bearbeitungsabschnitten bestimmt werden. Somit berücksichtigt das erfindungsgemäße Verfahren, ob die Bearbeitung im Moment an geraden Abschnitten, Innendradien oder Außenradien des Werkstücks stattfindet.

Die Kompensation der Abdrängung des Werkzeugs kann besonders gut ausgeglichen werden, wenn die Steuereinheit die Kompensation sowohl basierend auf dem Werkzeugradius R1 und dem Krümmungsradius R2 sowie der Eingriffslänge L und der Eingriffslänge LG am geraden Abschnitt berücksichtigt und insbesondere einen Mittelwert bildet.

Die Steuereinheit ist eingerichtet, die Kompensation der Abdrängung des Werkzeugs bei der Bearbeitung durch eine Anpassung einer relativen Geschwindigkeit FB zwischen dem Werkzeug und dem Werkstück auszuführen. D.h., durch Anpassung der Relativgeschwindigkeit zwischen Werkzeug und Werkstück wird die Kompensation der Werkzeugabdrängung ausgeführt. Dies kann auf relativ einfache Weise durch die Steuereinheit umgesetzt werden und ermöglicht eine hochgenaue Bearbeitung des Werkstücks.

Alternativ oder zusätzlich ist die Steuereinheit eingerichtet, die Kompensation der Abdrängung des Werkzeugs bei der Bearbeitung durch eine Korrektur einer Werkzeugbahn auszuführen.

Vorzugsweise wird ein Korrekturwert FB für die Geschwindigkeit des Berührpunkts bei der Bearbeitung eines Außenradius des Werkstücks

a) mittels der Formel

$$FB = FB0 + FK \cdot E^k$$

mit dem Maß E als Verhältnis des Werkzeugradius R1 zum Krümmungsradius R2 berechnet, wobei FB0 ein Wert für die Geschwindigkeit des Berührpunkts am geraden Abschnitt ist, FK eine erste Korrekturkonstante und k eine zweite Korrekturkonstante ist und/oder

b) mittels der Formel

$$FB = FB0 + FK \cdot (1 - E)^k$$

mit dem Maß E als Verhältnis der aktuellen Eingriffslänge L zur Eingriffslänge LG am geraden Abschnitt berechnet, wobei FB0 ein Wert für die Geschwindigkeit des Berührpunkts am geraden Abschnitt ist, FK eine erste Korrekturkonstante und k eine zweite Korrekturkonstante ist.

Weiter bevorzugt wird ein Korrekturwert FB bei der Bearbeitung eines Innenradius des Werkstücks für die Geschwindigkeit des Berührpunkts

a) mittels der Formel

$$FB = FB0 - FK \cdot E^k$$

mit dem Maß E als Verhältnis des Werkzeugradius R1 zum Krümmungsradius R2 berechnet, wobei FB0 ein Wert für die Geschwindigkeit des Berührpunkts am geraden Abschnitt ist, FK eine erste Korrekturkonstante und k eine zweite Korrekturkonstante ist und/oder
b) mittels der Formel

$$FB = FB0 - FK \cdot (E - 1)^k$$

mit dem Maß E als Verhältnis der aktuellen Eingriffslänge L zur Eingriffslänge LG am geraden Abschnitt berechnet, wobei FB0 ein Wert für die Geschwindigkeit des Berührpunkts am geraden Abschnitt ist, FK eine erste Korrekturkonstante und k eine zweite Korrekturkonstante ist.

Somit ist die Steuereinheit bevorzugt eingerichtet, die Kompensation der Abdrängung des Werkzeugs durch eine Anpassung einer relativen Geschwindigkeit FB zwischen Werkstück und Werkzeug bei einem Außenradius mittels zwei Berechnungsmethoden zu berechnen und bei einem Innenradius ebenfalls mittels zwei Berechnungsmethoden zu berechnen. Eine Genauigkeit der Bearbeitung kann erhöht werden, wenn bevorzugt für einen Außenradius bzw. einen Innenradius jeweils beide alternativen Berechnungsverfahren durchgeführt werden, um die Geschwindigkeit des Berührpunkts an die Abdrängung des Werkzeugs anzupassen.

Vorzugsweise wird ein Korrekturwert S für die Werkzeugbahn bei der Bearbeitung eines Außenradius

a) mittels der Formel

$$S = SG - SR \cdot E^k$$

mit dem Maß E als Verhältnis des Werkzeugradius R1 zum Krümmungsradius R2 berechnet, wobei SG der Korrekturwert für die Werkzeugbahn an geraden Abschnitten des Werkstücks ist, SR eine erste Korrekturkonstante ist und k eine zweite Korrekturkonstante ist, und/oder
b) mittels der Formel

$$S = SG - SR \cdot (1 - E)^k$$

mit dem Maß E als Verhältnis der aktuellen Eingriffslänge L zur Eingriffslänge LG am geraden Abschnitt berechnet, wobei SG ein Korrekturwert für die Werkzeugbahn an geraden Abschnitten des Werkstücks ist, SR eine erste Korrekturkonstante ist und k eine zweite Korrekturkonstante ist.

Weiter bevorzugt wird ein Korrekturwert S für die Werkzeugbahn bei der Bearbeitung eines Innenradius

a) mittels der Formel

$$S = SG + SR \cdot E^k$$

mit dem Maß E als Verhältnis des Werkzeugradius R1 zum Krümmungsradius R2 berechnet, wobei SG ein Korrekturwert für die Werkzeugbahn an geraden Abschnitten des Werkstücks ist, SR eine erste Kor-

**EP 4 367 561 B1**

rekturkonstante ist und k eine zweite Korrekturkonstante ist, und/oder

b) mittels der Formel

$$S = SG + SR \cdot (E - 1)^k$$

mit dem Maß E als Verhältnis der aktuellen Eingriffslänge L zur Eingriffslänge LG am geraden Abschnitt berechnet, wobei SG ein Korrekturwert für die Werkzeugbahn an geraden Abschnitten des Werkstücks ist, SR eine erste Korrekturkonstante ist und k eine zweite Korrekturkonstante ist.

Somit kann eine Korrektur einer Werkzeugbahn bei einer Abdrängung des Werkzeugs bei einem Außenradius mittels zwei Berechnungsmethoden erfolgen und bei einem Innenradius ebenfalls mittels zwei Berechnungsmethoden erfolgen. Zur Erhöhung der Genauigkeit können für den Außenradius und den Innenradius jeweils beide Berechnungsmethoden gleichzeitig ausgeführt werden und dann insbesondere ein Mittelwert gebildet werden.

Besonders bevorzugt verwendet das erfindungsgemäße Verfahren eine Kombination der Berechnung des Kompensationswertes für die Abdrängung, bei der eine Korrektur der Werkzeugbahn und eine Korrektur der Relativgeschwindigkeit zwischen Werkzeug und Werkstück kombiniert werden. Dann ist eine besonders hochgenaue Bearbeitung des Werkstücks möglich.

Die Korrekturwerte zur Bestimmung der Anpassung der Relativgeschwindigkeit zwischen Werkzeug und Werkstück und/oder der Korrektur der Werkzeugbahn werden vorzugsweise empirisch bestimmt. Dabei können auch unterschiedliche erste und zweite Korrekturkonstanten für Innenradien und Außenradien vorgesehen sein.

Besonders bevorzugt berücksichtigt das erfindungsgemäße Verfahren zur Kompensation einen Verlauf der noch zu bearbeitenden Werkstückoberfläche. Hierdurch kann eine besonders hochgenaue Bearbeitung von Werkstücken erfolgen, da insbesondere bei einer Änderung der Geometrie der Werkstückoberfläche, beispielsweise von einem geraden Abschnitt in einen Abschnitt mit Innenradius oder Außenradius oder umgekehrt oder einer Änderung der Krümmung eines bogenförmigen Abschnitts eine Kompensation schon vor Erreichen des eigentlichen Übergangspunkts zwischen den geometrisch unterschiedlichen Werkstückoberflächen möglich ist. Somit kann beispielsweise vor Erreichen eines Übergangspunkts am Werkstück vom Übergang eines geraden Abschnitts in einen mit Radius behafteten Abschnitt eine Relativgeschwindigkeit zwischen Werkzeug und Werkstück und/oder eine Werkzeugbahn angepasst werden. Dadurch wird insbesondere eine hochgenaue Bearbeitung an den Übergangspunkten bei Geometrieänderungen des Werkstücks möglich.

Das erfindungsgemäße Verfahren wird besonders bevorzugt bei einer Umfangsbearbeitung von Werkstücken ausgeführt, wobei sowohl ein Außenumfang als auch ein Innenumfang bearbeitet werden kann. Auch kann bei sphärischen Flächen das erfindungsgemäße Verfahren zum Einsatz kommen.

Um eine noch hochgenauere Bearbeitung des Werkstücks zu ermöglichen, ist die Steuereinheit ferner eingerichtet, die Kompensation der Abdrängung des Werkzeugs unter Berücksichtigung einer Länge des Werkzeugs in Axialrichtung des Werkzeugs auszuführen und/oder unter Berücksichtigung einer Geometrie des Werkzeugschafts auszuführen und/oder unter Berücksichtigung einer Axialeingriffslänge des Werkzeugs in axialer Richtung des Werkzeugs im Werkstück auszuführen.

Besonders bevorzugt sind die erste Korrekturkonstante und/oder die zweite Korrekturkonstante abhängig von der Werkzeuggeometrie, insbesondere dem Durchmesser, der Schaftgeometrie, der Schneidenlänge etc., der Art des Werkzeugs, der Beschaffenheit der Schneiden des Werkzeugs, dem Material der Schneiden, insbesondere einer Körnung bei einem Schleifwerkzeug, dem Aufmaß des Werkstücks, der Drehzahl des Werkzeugs, der Geschwindigkeit des Berührpunkts zwischen Werkstück und Werkzeug und/oder dem Material des Werkstücks.

Die Korrekturkonstanten FK, SR und k sind vorzugsweise für alle Formeln gleich vorgegeben.

Weiter bevorzugt weist die Steuereinheit einen Speicher auf, in welchem Werte für die Korrekturkonstanten abgelegt sind.

Besonders bevorzugt ist die Steuereinheit eingerichtet, die Kompensation der Abdrängung des Werkzeugs mittels eines lernenden Systems für die Korrekturkonstanten durchzuführen. Hierdurch kann über die Zeit die Genauigkeit bei der Kompensation der Abdrängung des Werkzeugs verbessert werden.

Eine weitere Steigerung der Bearbeitungsgenauigkeit ist möglich, wenn vorzugsweise vor der finalen Bearbeitung des Werkstücks ein noch vorhandenes Aufmaß am Werkstück (Ist-Werkstück) gemessen wird. Das Aufmaß wird vorzugsweise in einer Einspannung in der Werkzeugmaschine gemessen oder alternativ in einer separaten Messmaschine. Das abzutragende Aufmaß auf dem Ist-Werkstück hängt dabei in der Regel von einer Vorbearbeitung ab. Auch bei der Vorbearbeitung kann es jedoch zu unterschiedlichen Werkzeugabdrängungen kommen. Falls diese nicht kompensiert wurden, kann das Aufmaß für die Bearbeitung des Ist-Werkstücks nicht konstant sein. Daher kann vor der endgültigen Bearbeitung des Ist-Werkstücks mittels einer Messung des tatsächlich vorhandenen Aufmaßes die Genauigkeit deutlich verbessert werden, insbesondere wenn das gemessene Aufmaß für die Berechnung der aktuellen Eingriffslänge L für jede Werkzeugposition am Werkstück herangezogen wird. Vorzugsweise wird eine Dicke des Aufmaßes des Werkstücks vor einer finalen Bearbeitung an beliebig vielen Stellen am Werkstück, insbesondere vollständig gemessen. Wenn das Maß E als Verhältnis des Werkzeugradius R1 zum Krümmungsradius R2 berechnet wird, wird die erste Korrekturkonstante FK für die Geschwindigkeit und/oder die erste Korrekturkonstante SR für die Werkzeugbahn und/oder die zweite Korrekturkonstante k bevorzugt in Abhängigkeit von dem tatsächlich abzutragenden Aufmaß am Werkstück bestimmt.

Besonders bevorzugt wird das erfindungsgemäße Verfahren bei einem Schleifverfahren mit einem zylinderförmigen Schleifwerkzeug, welches in axialer Richtung des Werkzeugs einen Schnellhub ausführt, verwendet. Das Werkzeug wird während dieser Schnellhubbearbeitung gleichzeitig relativ zum Werkstück nur langsam entlang der Kontur des Werkstücks bewegt.

Die Korrektur der Werkzeugbahn zur Kompensation der Abdrängung des Werkzeugs hat gegenüber einer Anpassung der Relativgeschwindigkeit des Berührpunkts den Vorteil, dass die Korrektur der Werkzeugbahn nur einen sehr geringen Einfluss auf die Dauer der Bearbeitung des Werkstücks hat. Eine Änderung der Relativgeschwindigkeit zwischen Werkzeug und Werkstück kann eine Verlängerung der Bearbeitungszeit nach sich ziehen.

Ferner betrifft die vorliegende Erfindung eine Werkzeugmaschine, welche eingerichtet ist, ein erfindungsgemäßes Verfahren auszuführen. Die Werkzeugmaschine ist vorzugsweise für eine Schnellhubbearbeitung mit einem zylinderförmigen Schleifwerkzeug eingerichtet.

Die Werkzeugmaschine umfasst vorzugsweise eine Steuereinheit und einen Speicher, in welchem sämtliche in der Werkzeugmaschine einzusetzenden Werkzeuge mit ihren individuellen Parametern und Korrekturkonstanten gespeichert sind.

Um nicht für jedes einzelne Werkzeug sämtliche Parameter und Korrekturkonstanten bei jeder Bearbeitung neu eingeben zu müssen, werden vorzugsweise Werkzeugtypen definiert, für die sämtliche Parameter und Korrekturkonstanten festgelegt sind. Wenn dann beispielsweise ein Werkzeug verschlissen ist und gegen ein neues Werkzeug ausgetauscht werden muss, wird das neue Werkzeug identisch zu dem alten Werkzeug eingerichtet, d.h. mit gleichem Werkzeughalter, gleichem Bearbeitungswerkzeug, gleicher Auskraglänge usw. und kann somit demselben Werkzeugtyp mit denselben Parametern und Korrekturkonstanten zugeordnet werden wie das zuvor verschlissene Werkzeug. Somit kann bevorzugt ein Satz Werkzeugtypen definiert werden, die hier in der Werkzeugmaschine verwendet werden.

Besonders bevorzugt werden für jedes Werkzeug in der Werkzeugmaschine und/oder für jeden verwendeten Werkzeugtyp die von der Geometrie des Werkzeugs abhängigen Parameter, die für die Ermittlung des Maßes E für die Eingriffsverhältnisse zur Abdrängungskompensation relevant sind, in dem Speicher (Werkzeugdatenbank) hinterlegt. Vorzugsweise können zusätzlich sämtliche weitere relevanten Parameter für die Eingriffsverhältnisse wie z.B. Drehzahl, abzutragendes Aufmaß, erste und zweite Korrekturkonstanten, Werkstückmaterial / Werkstückeigenschaften und/oder Temperatur im Arbeitsraum hinterlegt werden.

Vorzugsweise werden für unterschiedliche Bearbeitungsprozesse sämtliche Parameter und Korrekturkonstanten in der Steuerung hinterlegt. Wenn mit einem Werkzeug zwei unterschiedliche Bearbeitungsprozesse in der Maschine durchgeführt werden, z.B. an Werkstücken aus unterschiedlichem Material oder mit unterschiedlichem Aufmaß, können für die unterschiedlichen Bearbeitungsprozesse die Parameter und Korrekturkonstanten separat in der Steuerung hinterlegt werden, so dass jeder Bearbeitungsprozess mit den zugehörigen Parametern und Korrekturkonstanten separat nutzbar ist. Parameter und Korrekturkonstante können somit nicht nur werkzeugbezogen, sondern auch prozessabhängig für unterschiedliche Bearbeitungssituationen gespeichert werden.

Nachfolgend werden bevorzugte Ausführungsbeispiele unter Bezugnahme auf die begleitende Zeichnung im Detail beschrieben. In der Zeichnung ist:

Fig. 1    eine schematische, perspektivische Ansicht einer Werkzeugmaschine, eingerichtet zur Durchführung des erfindungsgemäßen Verfahrens gemäß einem ersten Ausführungsbeispiel der Erfindung,

Fig. 2    eine schematische Seitenansicht eines sich mit einem Werkstück im Eingriff befindlichen Werkzeugs mit überhöhter Darstellung der Abdrängung des Werkzeugs,

Fig. 3    eine schematische Darstellung einer Bearbeitung eines Werkstücks an einem geraden Abschnitt des Werkstücks,

Fig. 4    eine vergrößerte Teildarstellung von Fig. 3,

Fig. 5    eine vergrößerte Teildarstellung von Fig. 3 einer Bearbeitung an einem Außenradius des Werkstücks,

Fig. 6    eine vergrößerte Teildarstellung einer Bearbeitung eines Innenradius des Werkstücks,

Fig. 7    eine schematische Darstellung der Kompensation einer Abdrängung eines Werkzeugs mit einer Korrektur der Werkzeugbahn an einem Außenradius und

Fig. 8    eine schematische Darstellung der Kompensation einer Abdrängung eines Werkzeugs mit einer Korrektur der Werkzeugbahn an einem Innenradius.

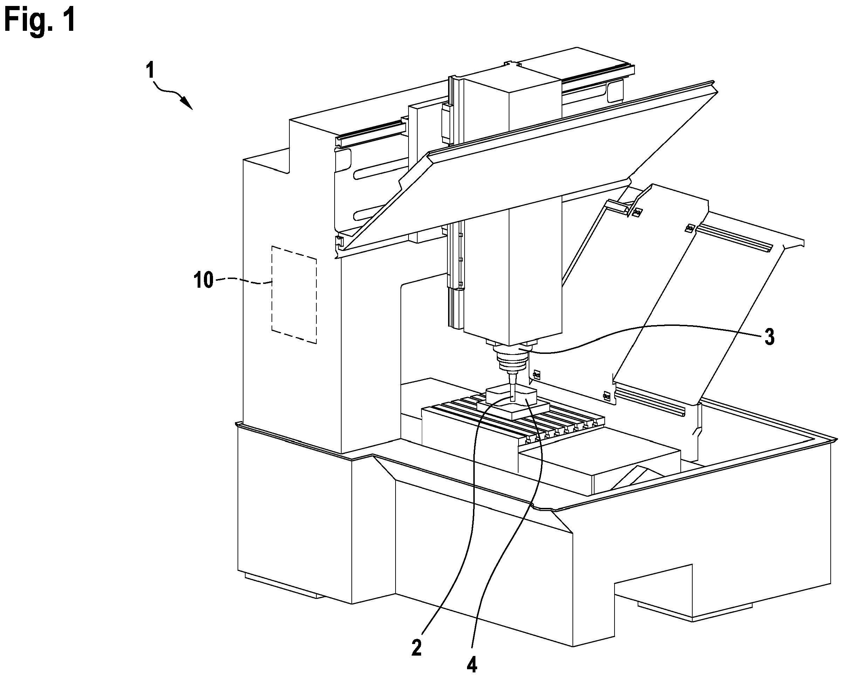

Nachfolgend werden unter Bezugnahme auf die Figuren 1 bis 8 verschiedene Ausführungsbeispiele der Erfindung im Detail beschrieben.

Fig. 1 zeigt schematisch eine Werkzeugmaschine 1, die zur Ausführung des erfindungsgemäßen Verfahrens eingerichtet ist. Die Werkzeugmaschine 1 umfasst eine Steuereinheit 10, welche eingerichtet ist, eine Abdrängung eines Werkzeugs 2 bei Bearbeitung eines Werkstücks 4 zu kompensieren. Das Werkzeug 2 ist mittels eines Werkzeughalters 9 in einer Spindel 3 rotierbar eingespannt. In diesem Ausführungsbeispiel ist das Werkzeug 2 ein Schleifstift.

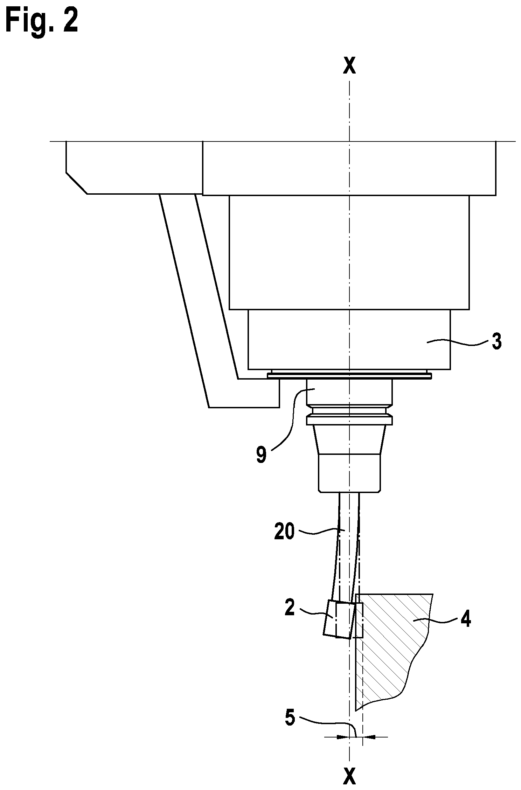

Fig. 2 zeigt schematisch und in überhöhter Darstellung die mögliche Abdrängung des Werkzeugs 2 beim Eingriff im Werkstück 4. Die Abdrängung 5 ist dabei definiert als die seitliche Auslenkung des Werkzeugs 2 von der üblichen vertikalen Ausrichtung des Werkzeugs 2 in seiner Mittelachse X-X.

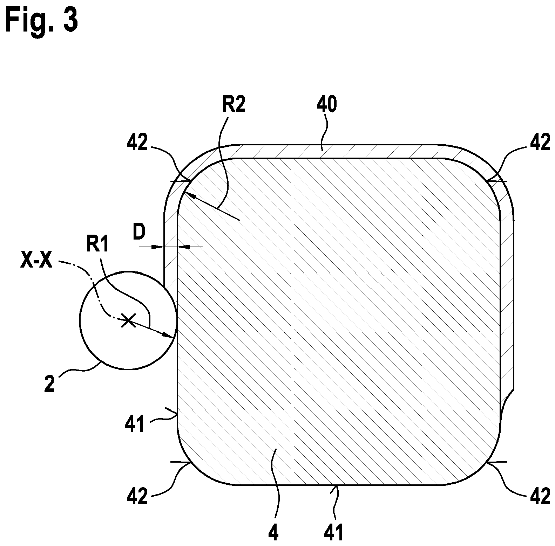

Fig. 3 zeigt schematisch in Draufsicht eine Bearbeitung eines Werkstücks 4 mit einem Werkzeug 2. Das dargestellte Werkstück weist dabei noch ein Aufmaß 40 mit einer Dicke D auf. Somit ist in Fig. 3 ein Ist-Zustand des Werkstücks (Ist-Werkstück) gezeigt. Das herzustellende Werkstück 4 (Soll-Werkstück) wird dann erreicht, wenn das gesamte Aufmaß 40 mittels des Werkzeugs 2 entfernt wurde.

Das Werkzeug 2 in Fig. 3 weist einen Werkzeugradius R1 auf. Das Soll-Werkstück 4 weist gerade Abschnitte 41 und Abschnitte 42 mit Außenradien mit einem Krümmungsradius R2 auf.

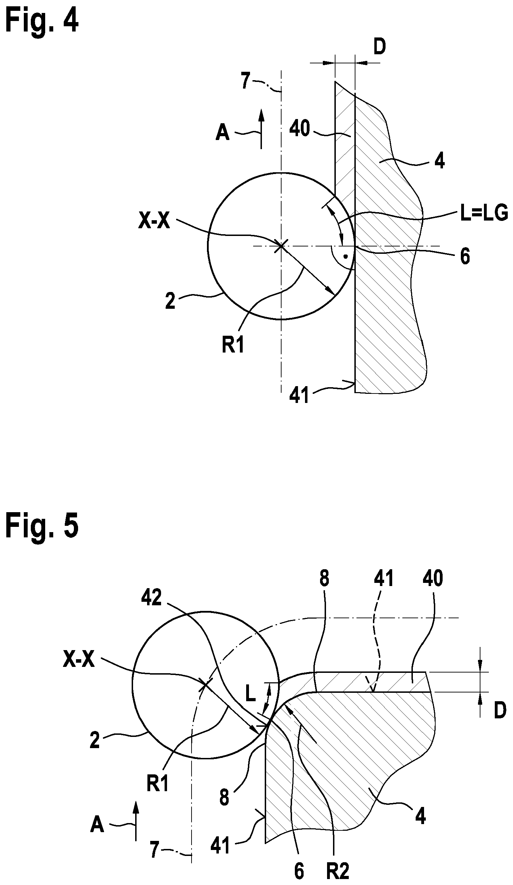

Fig. 4 zeigt schematisch einen Eingriffszustand des Werkzeugs 2 an einem geraden Abschnitt 41 von Werkstück 4. Hierbei wird das Aufmaß 40 vom Ist-Werkstück entfernt. Weiterhin ist in Fig. 4 ein Berührpunkt 6 eingezeichnet. Der Berührpunkt 6 ist definiert als der Punkt, an welchem das Werkzeug 2 das Werkstück 4 berührt, wobei eine Senkrechte von der Werkstückoberfläche durch eine Mittelachse X-X des Werkzeugs 2 hindurchgeht.

Weiterhin ist in Fig. 4 eine aktuelle Eingriffslänge L zwischen Werkzeug 2 und Aufmaß 40 von Werkstück 4 dargestellt. Da in diesem Beispiel die aktuelle Eingriffslänge L des Werkzeugs 2 am Werkstück 4 einer Eingriffslänge LG des Werkzeugs 2 in Umfangsrichtung im Aufmaß 40 des Werkstücks 4 bei Bearbeitung eines geraden Abschnitts 41 des Werkstücks 4 entspricht, ist L = LG.

Weiterhin ist in Fig. 4 eine Werkzeugbahn 7 dargestellt, bei welcher die Steuereinheit 10 schon die notwendige Kompensation der Abdrängung des Werkzeugs 2 beim Eingriff mit dem Werkstück 4 ausgeführt hat. Da in Fig. 4 ein gerader Abschnitt 41 des Werkstücks 4 bearbeitet wird, ist die Werkzeugbahn 7 linear und parallel zum geraden Abschnitt 41.

Fig. 5 zeigt schematisch einen Eingriff des Werkzeugs 2 in einem Kurvenabschnitt des Werkstücks 4 an einem Außenradius 42 mit Krümmungsradius R2. Der Berührpunkt 6 befindet sich hierbei schon an dem bogenförmigen Abschnitt des Werkstücks 4.

Weiterhin ist in Fig. 5 eine aktuelle Eingriffslänge L zwischen Werkzeug 2 und Aufmaß 40 des Werkstücks 4 eingezeichnet. Die eingezeichnete aktuelle Eingriffslänge L ist hierbei kleiner als die in Fig. 4 gezeigte Eingriffslänge LG am geraden Abschnitt 41, da das Werkzeug 2 gerade den Außenradius 42 bearbeitet und die Dicke D des Aufmaßes 40 am geraden Abschnitt 41 und am Außenradius 42 gleich ist.

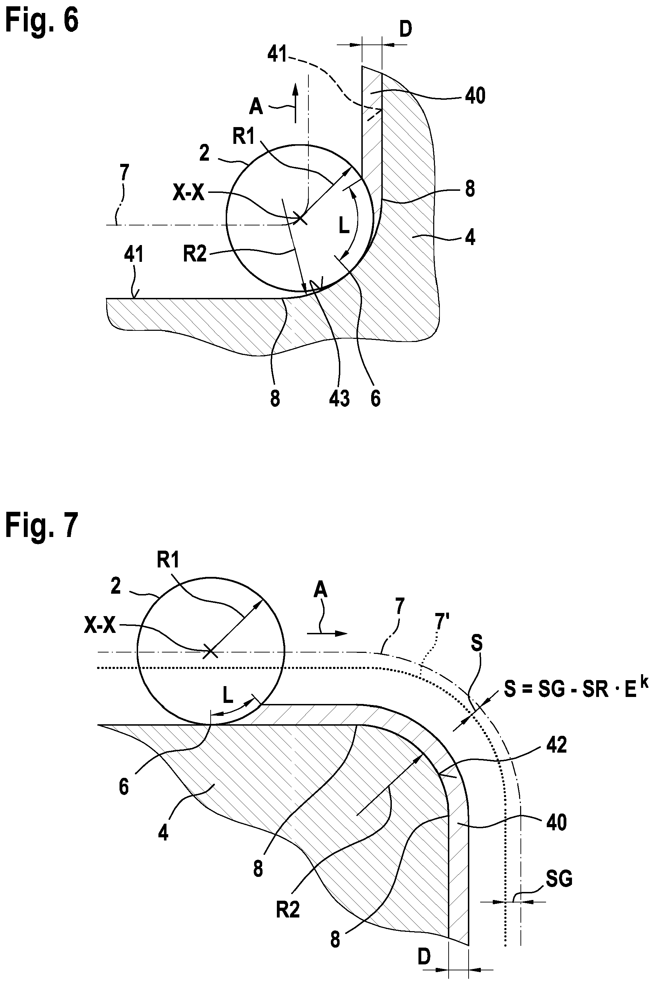

Fig. 6 zeigt schematisch eine Bearbeitungssituation am Innenradius 43 mit einem Innenradius R2. Der Berührpunkt 6 befindet sich dabei im Bereich des Innenradius 43. Weiterhin ist in Fig. 6 schematisch eine aktuelle Eingriffslänge L eingezeichnet. Wie aus Fig. 6 ersichtlich ist, ist die aktuelle Eingriffslänge L aufgrund des gerade bearbeiteten Innenradius 43 größer als die in Fig. 4 gezeigte Eingriffslänge LG am geraden Abschnitt 41, auch weil wieder die Dicke D des Aufmaßes 40 am geraden Abschnitt 41 und am Innenradius 43 gleich ist.

In den Figuren 4 bis 6 ist jeweils das gleiche Werkzeug 2 mit gleichem Werkzeugradius R1 dargestellt, welches jeweils Aufmaße 40 mit gleicher Dicke D abfräst oder schleift. Wie unmittelbar aus einem Vergleich der Figuren 4, 5 und 6 ersichtlich ist, ist die jeweilige aktuelle Eingriffslänge L abhängig von der Geometrie der zu bearbeitenden Fläche am Werkstück 4. Bei einem Innenradius 43 ist die aktuelle Eingriffslänge L größer als die Eingriffslänge LG am geraden Abschnitt 41 (Fig. 6). Bei Bearbeitung eines Außenradius 42 (Fig. 5) ist die aktuelle Eingriffslänge L kleiner als die Eingriffslänge LG am geraden Abschnitt 41. Dementsprechend muss eine geänderte Kompensation der Abdrängung des Werkzeugs 2 beim Eingriff mit dem Werkstück 4 erfolgen.

Fig. 7 zeigt im Detail die Kompensation der Abdrängung des Werkzeugs 2 bei Bearbeitung am Außenradius 42. Das Bezugszeichen 7 bezeichnet dabei in der punktiert gestrichelten Linie die Werkzeugbahn ohne Kompensation. Mit dem Bezugszeichen 7' ist die Werkzeugbahn mit Kompensation überhöht dargestellt. Wie aus Fig. 7 ersichtlich ist, wird bei der Werkzeugbahn 7' mit Kompensation die Werkzeugbahn 7' für das Werkzeug 2 im Bereich des Außenradius 42 weniger stark korrigiert als am geraden Abschnitt 41. Der Abstand der kompensierten Werkzeugbahn 7' zur nicht kompensierten Werkzeugbahn 7 ist im Bereich des Außenradius 42 kleiner als am geraden Abschnitt 41. Dadurch kann die Abdrängung des Werkzeugs 2 bei Bearbeitung des Außenradius 42 genauer kompensiert werden.

Fig. 7 zeigt beispielhaft das erfindungsgemäße Verfahren zur Kompensation einer Abdrängung eines Werkzeugs 2 bei einer Bearbeitung des Werkstücks 4 an einem Außenradius 42. Das Werkstück 4 weist noch ein Aufmaß 40 auf, welches durch das Werkzeug 2 entfernt werden soll, um ein gewünschtes Soll-Werkstück ohne Aufmaß 40 herzustellen. Das Werkzeug 2 befindet sich im Eingriff mit dem Werkstück 4 und bewegt sich in Richtung des Pfeils A auf einer vorgegebenen Werkzeugbahn 7'.

Um zu vermeiden, dass am Außenradius 42 der gewünschte Soll-Zustand des Werkstücks 4 hergestellt wird, erfolgt eine Kompensation der Abdrängung des Werkzeugs 2. Die Kompensation der Abdrängung des Werkzeugs 2 soll in diesem Ausführungsbeispiel mittels einer Korrektur der Werkzeugbahn 7 durchgeführt werden. Dies kann grundsätzlich durch zwei Arten, wie nachfolgend beschrieben, durchgeführt werden, wobei die beiden Kompensationsarten auch miteinander kombiniert werden können. Zur Korrektur der Werkzeugbahn 7 wird daher ein Korrekturwert S für die Werkzeugbahn mittels der Formel

$$S = SG - SR \cdot E^k \quad \text{(Formel 1)}$$

berechnet, wobei SG der Korrekturwert für die Werkzeugbahn 7 an einem geraden Abschnitt 41 des Werkstücks ist, SR eine erste Korrekturkonstante und k eine zweite Korrekturkonstante. Ein Wert für das Maß E von Eingriffsverhältnissen im Berührpunkt 6 zwischen Werkzeug 2 und Werkstück 4 wird durch das Verhältnis des Werkzeugradius R1 zum Krümmungsradius R2 des Außenradius 42 berechnet: E = R1/R2.

Diese Kompensation gemäß Formel 1 wird in Fig. 7 gezeigt. Es verlaufen die ursprüngliche Werkzeugbahn 7 und eine Werkzeugbahn 7', welche die Kompensation der Abdrängung des Werkzeugs 2 berücksichtigt, an den geraden Abschnitten 41 des Werkstücks 4 parallel. Die Werkzeugbahn 7' mit Kompensation der Abdrängung verläuft dabei etwas näher zum Werkstück 4. Im Bereich des Außenradius 42 ändert sich allerdings der Abstand zwischen der ursprünglichen Werkzeugbahn 7 und der Werkzeugbahn 7' mit Kompensation der Abdrängung.

Die zweite Alternative zur Berechnung eines Korrekturwerts S für die Werkzeugbahn 7 für den Außenradius 42 kann mittels der Formel

$$S = SG - SR \cdot (1 - E)^k \quad \text{(Formel 2)}$$

berechnet werden, wobei SG der Korrekturwert für die Werkzeugbahn 7 an einem geraden Abschnitt 41 des Werkstücks 4 ist, SR eine erste Korrekturkonstante und k eine zweite Korrekturkonstante. Dabei wird das Maß E für Eingriffsverhältnisse im Berührpunkt 6 zwischen Werkzeug 2 und Werkstück 4 mittels des Verhältnisses der aktuellen Eingriffslänge L zur Eingriffslänge LG am geraden Abschnitt 41 berechnet: E = L/LG.

Um eine Genauigkeit bei der Kompensation der Abdrängung des Werkzeugs 2 zu erhöhen, können beide oben genannten Formeln 1 und 2 verwendet werden und für die Kompensation ein Mittelwert gebildet werden.

Um die Genauigkeit weiter zu erhöhen, kann bei der Bearbeitung des Außenradius 42 auch eine Kompensation der Abdrängung des Werkzeugs 2 durch eine Anpassung einer Relativgeschwindigkeit zwischen Werkzeug 2 und Werkstück 4 durchgeführt werden. Eine Geschwindigkeit FB des Berührpunkts 6 kann dabei mittels der Formel

$$FB = FB0 + FK \cdot E^k \quad \text{(Formel 3)}$$

berechnet werden, wobei FB0 die Geschwindigkeit des Berührpunkts 6 an einem geraden Abschnitt 41, FK eine erste Korrekturkonstante und k eine zweite Korrekturkonstante ist. Das Maß E wird mittels des Verhältnisses des Werkzeugradius R1 zum Krümmungsradius R2 berechnet: E = R1/R2.

Alternativ oder zusätzlich kann für eine Berechnung einer Geschwindigkeit FB des Berührpunkts 6 diese auch mittels der Formel

$$FB = FB0 + FK \cdot (1 - E)^k \quad \text{(Formel 4)}$$

berechnet werden, wobei FB0 die Geschwindigkeit des Berührpunkts 6 an einem geraden Abschnitt 41, FK eine erste Korrekturkonstante und k eine zweite Korrekturkonstante ist. Das Maß E wird mittels des Verhältnisses der aktuellen Eingriffslänge L zur Eingriffslänge LG am geraden Abschnitt 41 berechnet: E = L/LG.

Hierbei ist selbstverständlich auch zur Erhöhung der Genauigkeit eine Kombination der beiden oben genannten Formeln 3 und 4 zur Anpassung der Geschwindigkeit für die Kompensation der Abdrängung des Werkzeugs 2 möglich.

Selbstverständlich können auch die beiden Berechnungsmethoden (Formel 3 und 4) für die Korrektur der Geschwindigkeit FB des Berührpunkts 6 mit den beiden Berechnungsmethoden (Formel 1 und 2) für die Korrektur der Werkzeugbahn 7 miteinander kombiniert werden und die Kompensation gleichzeitig durch eine Anpassung der Relativgeschwindigkeit zwischen Werkzeug 2 und Werkstück 4 sowie einer Korrektur der Werkzeugbahn 7 ausgeführt werden.

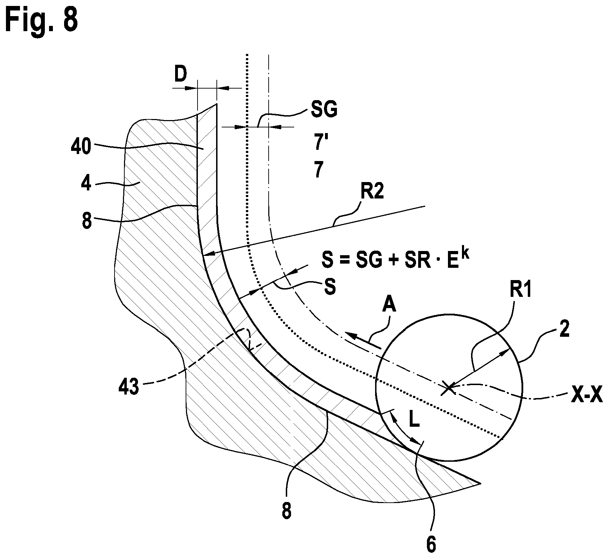

Somit kann eine Kompensation der Abdrängung des Werkzeugs 2 am Außenradius 42 durch zwei Berechnungsverfahren betreffend eine Anpassung einer Relativgeschwindigkeit des Berührpunkts 6 und/oder durch zwei Berechnungsverfahren zur Korrektur einer Werkzeugbahn 7 ausgeführt werden, wobei beliebige Kombinationen der Berechnungsverfahren möglich sind. Fig. 8 zeigt schematisch eine Kompensation der Abdrängung des Werkzeugs 2 bei einer Bearbeitung des Werkstücks 4 an einem Innenradius 43 des Werkstücks 4. Auch bei der Kompensation der Abdrängung an einem Innendradius 43 sind grundsätzlich vier verschiedene Möglichkeiten zur Berechnung vorhanden, wobei zwei Berechnungsmethoden die Korrektur der Werkzeugbahn 7 zur Kompensation der Abdrängung betreffen und zwei Berechnungsmethoden die Anpassung der Relativgeschwindigkeit zwischen Werkstück 4 und Werkzeug 2 am Berührpunkt 6 betreffen.

Zur Korrektur der Werkzeugbahn 7 bei einem Innenradius 43 kann eine Kompensation der Abdrängung des Werkzeugs 2 durch Berechnung eines Korrekturwerts S für die Werkzeugbahn 7 mit der Formel

$$S = SG + SR \cdot E^k \quad (Formel\ 5)$$

berechnet werden, wobei SG der Korrekturwert für die Werkzeugbahn 7 an geraden Abschnitten 41 ist, SR eine erste Korrekturkonstante und k eine zweite Korrekturkonstante ist. Ein Wert für das Maß E von Eingriffsverhältnissen im Berührpunkt 6 zwischen Werkzeug 2 und Werkstück 4 wird dabei durch das Verhältnis des Werkzeugradius R1 zum Krümmungsradius R2 des Innenradius berechnet: E = R1 / R2.

Fig. 8 zeigt die Kompensation der ursprünglichen Werkzeugbahn 7 mittels Formel 5 und als Ergebnis in überhöhter Darstellung eine Werkzeugbahn 7' zur Kompensation der Abdrängung des Werkzeugs 2 im Vergleich am Innenradius 43. An den geraden Abschnitten 41 des Werkstücks 2 verlaufen die beiden Werkzeugbahnen 7, 7' parallel zueinander, wobei der Korrekturwert SG für die Werkzeugbahn 7 an geraden Abschnitten 41 eingezeichnet ist. Um die Abdrängung des Werkzeugs 2 auszugleichen, wird die korrigierte Werkzeugbahn 7' mit der Kompensation der Abdrängung im Bereich des Innenradius 43 näher an das Werkstück 4 herangeführt, um letztendlich eine richtige Kontur des zu erzeugenden Soll-Werkstücks 4 zu erreichen. Die Korrektur der Werkzeugbahn 7 wird dabei mittels der Formel 5 berechnet.

Alternativ oder zusätzlich kann eine Korrektur der Werkzeugbahn 7 auch mittels der Formel

$$S = SG + SR \cdot (E - 1)^k \quad (Formel\ 6)$$

berechnet werden, wobei SG der Korrekturwert für die Werkzeugbahn 7 an geraden Abschnitten 41 ist, SR eine erste Korrekturkonstante und k eine zweite Korrekturkonstante ist. Das Maß E ist das Verhältnis der aktuellen Eingriffslänge L zur Eingriffslänge LG am geraden Abschnitt 41: E = L/LG.

Hierbei ist es auch möglich, dass die Korrektur der Werkzeugbahn 7 zur Kompensation der Abdrängung durch eine Kombination der beiden Berechnungsmethoden (Formel 5 und 6) und Bildung eines Mittelwerts erfolgt.

Alternativ kann bei einem Innenradius 43 auch eine Anpassung einer Relativgeschwindigkeit zwischen Werkzeug 2 und Werkstück 4 ausgeführt werden. Eine Geschwindigkeit FB des Berührpunkts 6 kann dabei mittels der Formel

$$FB = FB0 - FK \cdot E^k \quad (Formel\ 7)$$

berechnet werden, wobei FB0 die Geschwindigkeit des Berührpunkts 6 an einem geraden Abschnitt 41, FK eine erste Korrekturkonstante und k eine zweite Korrekturkonstante ist. Das Maß E wird durch das Verhältnis des Werkzeugradius R1 zum Krümmungsradius R2 bestimmt: E = R1/R2.

Alternativ kann eine Korrektur für die Geschwindigkeit FB des Berührpunkts 6 bei einem Innenradius mittels der Formel

$$FB = FB0 - FK \cdot (E - 1)^k \quad (Formel\ 8)$$

berechnet werden, wobei FB0 die Geschwindigkeit des Berührpunkts 6 an einem geraden Abschnitt 41, FK eine erste Korrekturkonstante und k eine zweite Korrekturkonstante ist. Das Maß E wird durch das Verhältnis der aktuellen Eingriffslänge L zur Eingriffslänge LG am geraden Abschnitt 41 bestimmt: E = L/LG.

Auch bei der Anpassung der Geschwindigkeit FB bei einem Innenradius 43 ist es möglich, dass die beiden Formeln 7 und 8 miteinander kombiniert werden. Ferner ist es möglich, dass bei der Kompensation der Abdrängung des Werkzeugs 2 am Innenradius 43 eine Kombination von zwei oder drei oder von allen vier oben genannten Formeln 5, 6, 7 und 8 durchgeführt wird.

Zu den Fig. 7 und 8 sei angemerkt, dass bei der Berechnung des Maßes E bevorzugt ein positiver Wert für den Radius R2 des Werkstücks 4 verwendet wird, unabhängig davon, ob es sich um einen Innenradius oder einen Außenradius handelt.

Hinsichtlich der ersten Korrekturkonstante FK und der zweiten Korrekturkonstante k sei ferner angemerkt, dass die Korrekturkonstanten für einen Innenradius 43 und einen Außenradius 42 unterschiedlich sein können. Dadurch wird eine höhere Genauigkeit bei der Kompensation der Abdrängung des Werkzeugs erreicht.

Insofern kann erfindungsgemäß eine Kompensation einer Abdrängung des Werkzeugs 2 bei einer Bearbeitung des Werkstücks 4 in Abhängigkeit der Geometrie des Werkstücks 4, insbesondere in Abhängigkeit von geraden Abschnitten 41, Innenradien 43 und Außenradien 42 ermöglicht werden. Eine Kompensation kann dabei durch ein Verhältnis des Werkzeugradius R1 zum Krümmungsradius R2 des Werkstücks 4 und/oder das Verhältnis der aktuellen Eingriffslänge L zur Eingriffslänge LG des Werkzeugs 2 in Umfangsrichtung im Aufmaß 40 des Werkstücks 4 berechnet werden. Eine Korrektur kann dann durch eine Anpassung einer Relativgeschwindigkeit FB zwischen Werkzeug 2 und Werkstück 4 und/oder eine Korrektur einer Werkzeugbahn 7 ausgeführt werden.

Die Korrekturkonstanten aller Formeln können beispielsweise empirisch ermittelt werden und in der Steuereinheit 10 der Werkzeugmaschine 1 hinterlegt werden. Hierbei ist es auch möglich, dass die Steuereinheit 10 als lernendes System eingerichtet ist und mit jeder Bearbeitung eine Anpassung der Korrekturkonstanten für einen besseren Ausgleich der Abdrängung des Werkzeugs 2 beim Eingriff im Werkstück 4 ermöglicht.

In der Steuereinheit 10 der Werkzeugmaschine 1 können ferner weitere Parameter für einzelne Werkzeuge 2 und/oder Werkzeugtypen hinterlegt werden und für eine Kompensation der Abdrängung des Werkzeugs 2 verwendet werden. Beispielsweise können alle Korrekturkonstanten auch abhängig sein von der Werkzeuggeometrie, insbesondere einer Länge des Schafts und/oder Konizität des Schafts und/oder Durchmesser des Schafts, der Art des Werkzeugs 2, der Beschaffenheit der Schneiden des Werkzeugs 2 oder einer Körnung des Werkzeugs 2, der Größe des Aufmaßes des Werkstücks 4, einer Drehzahl des Werkzeugs 2 einer gewünschten Geschwindigkeit des Berührpunkts 6 und/oder eines Materials des Werkstücks 4.

Weiterhin ist es möglich, dass die Steuereinheit 10 eingerichtet ist, einen zukünftigen Verlauf der Werkstückoberfläche in Bearbeitungsrichtung des Werkzeugs 2 relativ zum Werkstück 4, welche noch zu bearbeiten ist, zu berücksichtigen. Es können insbesondere Übergangsbereiche bei Übergangspunkten 8 zwischen geraden Abschnitten 41 und bogenförmigen Abschnitten 42, 43 oder zwischen bogenförmigen Abschnitten mit sich veränderndem Krümmungsradius R2 berücksichtigt werden.

Wenn ein Werkzeug 2 in Fig. 5 oder Fig. 7 entlang der Werkzeugbahn 7 bewegt werden soll und dafür die korrigierte Werkzeugbahn 7' mit Formel 2 berechnet wird, kann für jeden Berührpunkt 6 zwischen Werkzeug 2 und Werkstück 4 die exakte aktuelle Eingriffslänge L berechnet werden.

Man erkennt insbesondere aus Fig. 5, dass sich die aktuelle Eingriffslänge L nicht schlagartig ändert, wenn Berührpunkt 6 einen Übergangspunkt 8 erreicht, sondern dass, bereits kurz bevor der Berührpunkt 6 den Übergangspunkt 8 erreicht, die aktuelle Eingriffslänge L sich kontinuierlich zu ändern beginnt, bis bei Erreichen des Berührpunktes 6 von Übergangspunkt 8 der Wert L=LG sich für den dann folgenden geraden Abschnitt 41 einstellt.

Genauso verhält es sich, wenn das Werkzeug 2 von einem geraden Abschnitt 41 in einen Außenradius 42 bewegt wird. Bereits vor Erreichen des Übergangspunkts 8 durch den Berührpunkt 6 beginnt sich die aktuelle Eingriffslänge L zu verringern, bis diese bei Erreichen des Berührpunktes 6 am Übergangspunkt 8 den Wert annimmt, der sich für den Krümmungsradius R2 im Außenradius 42 ergibt. Entsprechend verhält es sich bei exakter Anwendung von Formel 2 bei Übergängen in Innenradien. Dieses Verhalten ist erwünscht, damit es nicht zu schlagartigen Veränderungen der Bahnkorrektur kommt, die zu Markierungen auf dem Werkstück führen können, auch wenn die Korrekturwerte für die Bahn relativ klein sind.

Wenn die korrigierte Werkzeugbahn 7' mit Hilfe des Radius R1 des Werkzeugs 2 und dem Krümmungsradius R2 des Werkstücks 4 gemäß Formel 1 oder Formel 5 berechnet wird, kann eine kontinuierliche, stetige Änderung der der Bahnkorrektur durch eine entsprechende Glättung in der Steuereinheit 10 vorgesehen werden, so dass Korrektursprünge an Übergangspunkten 8 in der korrigierten Werkzeugbahn 7' vermieden werden.

Da es nicht unbedingt gegeben ist, dass das Aufmaß 40 auf dem Werkstück 4 überall eine konstante Dicke D hat, ist bevorzugt vorgesehen, die Dicke D des Aufmaßes 40 überall am Werkstück 4 vor der Bearbeitung zu messen. Das hat insbesondere bei Berechnung der Kompensation der Abdrängung des Werkzeugs 2 mit Formel 2, Formel 4, Formel 6 oder Formel 8 den Vorteil, dass die aktuelle Eingriffslänge L für jeden Berührpunkt 6 zwischen Werkzeug 2 und Werkstück 4 in Abhängigkeit von der gemessenen Dicke D des Aufmaßes 40 bestimmt werden kann und die Kompensation genauer wird. Wenn die in Abhängigkeit der Dicke D des Aufmaßes 40 bestimmte aktuelle Eingriffslänge L < LG ist, kommt bei Berechnung einer korrigierten Werkzeugbahn 7' Formel 2 mit den zugehörigen Korrekturkonstanten zur Anwendung, wenn die so bestimmte aktuelle Eingriffslänge L > LG oder L = LG ist, kommt Formel 6 mit den zugehörigen Korrekturkonstanten zur Anwendung. Die Auswahl der Formel richtet sich dann nicht mehr danach, ob es sich um einen Außenradius 42 oder einen Innenradius 43 handelt, sondern nach dem Verhältnis L/LG.

Gleiches gilt, wenn die Geschwindigkeit FB des Berührpunktes 6 in Abhängigkeit von der aktuellen Eingriffslänge L gemäß Formel 4 oder Formel 8 berechnet wird. Auch in diesem Fall wird die Auswahl der entsprechenden Formel nach dem Verhältnis von L/LG bestimmt.

LG ist dann nicht mehr die aktuelle Eingriffslänge L an einem geraden Abschnitt 41, sondern die aktuelle Eingriffslänge L, für die der Korrekturwert SG für die Werkzeugbahn 7 oder die Geschwindigkeit FB0 des Berührpunktes 6 die Abdrängung des Werkzeugs 2 bestmöglich kompensiert.

Neben der vorstehenden schriftlichen Beschreibung der Erfindung wird zu deren ergänzender Offenbarung hiermit explizit auf die zeichnerische Darstellung der Erfindung in den Fig. 1 bis 8 Bezug genommen.

Bezugszeichenliste

| | |
|---|---|
| 1 | Werkzeugmaschine |
| 2 | Werkzeug |
| 3 | Spindel |
| 4 | Werkstück |
| 5 | Abdrängung |
| 6 | Berührpunkt |
| 7 | Werkzeugbahn |
| 7' | Werkzeugbahn mit Kompensation der Abdrängung |
| 8 | Übergangspunkt |
| 9 | Werkzeughalter |
| 10 | Steuereinheit |
| 20 | Schaft |
| 40 | Aufmaß |

41 gerader Abschnitt
42 Außenradius
43 Innenradius
A Bewegungsrichtung des Werkzeugs
D Dicke des Aufmaßes
FB Geschwindigkeit des Berührpunkts
FB0 Geschwindigkeit des Berührpunkts an einem geraden Abschnitt
FK erste Korrekturkonstante
k zweite Korrekturkonstante
L Eingriffslänge des Werkzeugs
LG Eingriffslänge des Werkzeugs am geraden Abschnitt
R1 Werkzeugradius
R2 Krümmungsradius des Werkstücks
S Korrekturwert für die Werkzeugbahn
SG Korrekturwert für die Werkzeugbahn an geraden Abschnitten des Werkstücks
SR erste Korrekturkonstante
k zweite Korrekturkonstante
X-X Mittelachse des Werkzeugs

**Patentansprüche**

1. Verfahren zur Kompensation einer Abdrängung eines Werkzeugs (2) bei einer Bearbeitung eines Werkstücks (4) mit einer Werkzeugmaschine (1),

- wobei eine Steuereinheit (10) der Werkzeugmaschine (1) die Kompensation der Abdrängung in Abhängigkeit eines Maßes E von Eingriffsverhältnissen in einem Berührpunkt (6) zwischen Werkzeug (2) und Werkstück (4) an geraden Abschnitten (41) und an bogenförmigen Abschnitten (42, 43) unterschiedlich ausgleicht,

a) basierend auf einem Verhältnis eines Werkzeugradius R1 und eines Krümmungsradius R2 des Werkstücks (4) gemäß der Formel

$$E = R1/R2$$

und/oder
b) basierend auf einem Verhältnis einer aktuellen Eingriffslänge L des Werkzeugs (2) in Umfangsrichtung am Werkstück (4) und einer Eingriffslänge LG des Werkzeugs (2) in Umfangsrichtung am Werkstück (4) bei Bearbeitung eines geraden Abschnitts (41) des Werkstücks (4) gemäß der Formel E = L/LG,

- wobei die Steuereinheit (10) eingerichtet ist, die Kompensation der Abdrängung des Werkzeugs (2) bei der Bearbeitung durch eine Anpassung einer relativen Geschwindigkeit FB zwischen Werkzeug (2) und Werkstück (4) auszuführen oder
- wobei die Steuereinheit (10) eingerichtet ist, die Kompensation der Abdrängung des Werkzeugs (2) bei der Bearbeitung durch eine Korrektur einer Werkzeugbahn (7) auszuführen.

2. Verfahren nach Anspruch 1, wobei die Geschwindigkeit (FB) des Berührpunkts (6) bei der Bearbeitung eines Außenradius (42) des Werkstücks (4)

a) mittels der Formel

$$FB = FB0 + FK \cdot E^k$$

mit dem Maß E als Verhältnis des Werkzeugradius R1 zum Krümmungsradius R2 berechnet wird, wobei FB0 ein Wert für die Geschwindigkeit des Berührpunkts (6) am geraden Abschnitt (41) ist, FK eine erste Korrekturkonstante und k eine zweite Korrekturkonstante ist und/oder
b) mittels der Formel

$$FB = FB0 + FK \cdot (1 - E)^k$$

mit dem Maß E als Verhältnis der aktuellen Eingriffslänge L zur Eingriffslänge LG am geraden Abschnitt (41) berechnet wird, wobei FB0 ein Wert für die Geschwindigkeit des Berührpunkts (6) am geraden Abschnitt (41) ist, FK eine erste Korrekturkonstante und k eine zweite Korrekturkonstante ist.

3. Verfahren nach Anspruch 1, wobei die Geschwindigkeit FB des Berührpunkts (6) bei der Bearbeitung eines Innenradius (43) des Werkstücks (4)

a) mittels der Formel

$$FB = FB0 - FK \cdot E^k$$

mit dem Maß E als Verhältnis des Werkzeugradius R1 zum Krümmungsradius R2 berechnet wird, wobei FB0 ein Wert für die Geschwindigkeit des Berührpunkts (6) am geraden Abschnitt (41) ist, FK eine erste Korrekturkonstante und k eine zweite Korrekturkonstante ist und/oder
b) mittels der Formel

$$FB = FB0 - FK \cdot (E - 1)^k$$

mit dem Maß E als Verhältnis der aktuellen Eingriffslänge L zur Eingriffslänge LG am geraden Abschnitt (41) berechnet wird, wobei FB0 ein Wert für die Geschwindigkeit des Berührpunkts (6) am geraden Abschnitt (41) ist, FK eine erste Korrekturkonstante und k eine zweite Korrekturkonstante ist.

4. Verfahren nach Anspruch 1, wobei ein Korrekturwert S für die Werkzeugbahn (7) bei der Bearbeitung eines Außenradius (42)

    a) mittels der Formel

$$S = SG - SR \cdot E^k$$

mit dem Maß E als Verhältnis des Werkzeugradius R1 zum Krümmungsradius R2 berechnet wird, wobei SG der Korrekturwert für die Werkzeugbahn (7) an geraden Abschnitten (41) des Werkstücks (4) ist, SR eine erste Korrekturkonstante ist und k eine zweite Korrekturkonstante ist, und/oder
    b) mittels der Formel

$$S = SG - SR \cdot (1 - E)^k$$

mit dem Maß E als Verhältnis der aktuellen Eingriffslänge L zur Eingriffslänge LG am geraden Abschnitt (41) berechnet wird, wobei SG ein Korrekturwert für die Werkzeugbahn (7) an geraden Abschnitten (41) des Werkstücks (4) ist, SR eine erste Korrekturkonstante ist und k eine zweite Korrekturkonstante ist.

5. Verfahren nach Anspruch 1 oder 4, wobei ein Korrekturwert S für die Werkzeugbahn (7) bei der Bearbeitung eines Innenradius (43)

    a) mittels der Formel

$$S = SG + SR \cdot E^k$$

mit dem Maß E als Verhältnis des Werkzeugradius R1 zum Krümmungsradius R2 berechnet wird, wobei SG ein Korrekturwert für die Werkzeugbahn an geraden Abschnitten (41) des Werkstücks (4) ist, SR eine erste Korrekturkonstante ist und k eine zweite Korrekturkonstante ist, und/oder
    b) mittels der Formel

$$S = SG + SR \cdot (E - 1)^k$$

mit dem Maß E als Verhältnis der aktuellen Eingriffslänge L zur Eingriffslänge LG am geraden Abschnitt berechnet wird, wobei SG ein Korrekturwert für die Werkzeugbahn (7) an geraden Abschnitten (41) des Werkstücks (4) ist, SR eine erste Korrekturkonstante ist und k eine zweite Korrekturkonstante ist.

6. Verfahren nach einem der vorhergehenden Ansprüche, wobei die Steuereinheit (10) eingerichtet ist, bei der Kompensation der Abdrängung eines Werkzeugs (2) einen Verlauf der Werkstückoberfläche, welche von dem Werkzeug (2) noch zu bearbeiten ist, zu berücksichtigen.

7. Verfahren nach Anspruch 6, wobei die Steuereinheit (10) eingerichtet ist, Übergangspunkte (8) zu bestimmen, an denen sich eine Geometrie der Werkstückoberfläche von einem geraden Abschnitt (41) in einen bogenförmigen Abschnitt (42, 43) und umgekehrt oder die Krümmung eines bogenförmigen Abschnitts (42, 43) ändert, und eine kontinuierliche Änderung der Kompensation vor Erreichen eines Übergangspunkts (8) durch den Berührpunkt (6) zu beginnen, so dass die Geschwindigkeit FB und/oder der Korrekturwert S für den Abschnitt hinter dem Übergangspunkt (8) im Übergangspunkt (8) erreicht wird und sprungförmige Änderungen der Geschwindigkeit FB oder des Korrekturwertes S vermieden werden.

8. Verfahren nach einem der vorhergehenden Ansprüche, wobei die Steuereinheit (10) ferner eingerichtet ist, die Kompensation der Abdrängung des Werkzeugs (2) unter Berücksichtigung einer Länge des Werkzeugs (2) in Axialrichtung des Werkzeugs (2) auszuführen und/oder

    die Kompensation der Abdrängung des Werkzeugs (2) unter Berücksichtigung einer Geometrie des Werkzeugschaftes (20) des Werkzeugs (2) auszuführen und/oder
    die Kompensation der Abdrängung des Werkzeugs (2) unter Berücksichtigung einer Axialeingriffslänge des Werkzeugs (2) am Werkstück (4) in axialer Richtung des Werkzeugs (2) zu berücksichtigen.

9. Verfahren nach einem der vorhergehenden Ansprüche, wobei die Korrekturkonstanten abhängig sind von der Art des Werkzeugs (2), der Beschaffenheit der Schneiden, einem Material und einer Körnung des Werkzeugs (2), dem Aufmaß (40) des Werkstücks (4), der Drehzahl des Werkzeugs (2), der Geschwindigkeit des Berührpunkts (6) und/oder dem Material des Werkstücks (4).

10. Verfahren nach einem der Ansprüche 2 bis 9, wobei die Steuereinheit (10) einen Speicher aufweist, in welchem Werte für die Korrekturkonstanten abgelegt sind, wobei die Werte für die Korrekturkonstanten insbesondere mittels eines lernenden Systems der Steuereinheit (10) kontinuierlich angepasst werden.

11. Verfahren nach einem der vorhergehenden Ansprüche, wobei die Dicke D des Aufmaßes (40) des Werkstücks (4) vor der finalen Bearbeitung an beliebig vielen Stellen am Werkstück (4) gemessen wird.

12. Verfahren nach einem der vorhergehenden Ansprüche, wobei, wenn das Maß E als Verhältnis des Werkzeugradius R1 zum Krümmungsradius R2 des Werkstücks (4) berechnet wird, die Steuereinheit (10) eingerichtet ist, für die Kompensation der Abdrängung eine Dicke D des Aufmaßes (40) zu berücksichtigen oder wobei die Steuereinheit (10) eingerichtet ist, die Dicke D des Aufmaßes (40) für eine Berechnung der aktuellen Eingriffslänge L des Werkzeugs (2) zu berücksichtigen.

13. Werkzeugmaschine (1), welche eingerichtet ist, ein Verfahren nach einem der vorhergehenden Ansprüche auszuführen.

**Claims**

1. Method for compensating deflection of a tool (2) during machining of a workpiece (4) using a machine tool (1),

   - wherein a control unit (10) of the machine tool (1) balances the compensation of the deflection differently in straight portions (41) and in curved portions (42, 43) depending on a dimension E of engagement conditions in a contact point (6) between the tool (2) and the workpiece (4),

      a) on the basis of a ratio of a tool radius R1 and a radius of curvature R2 of the workpiece (4) according to the formula

$$E = R1/R2$$

      and/or
      b) on the basis of a ratio of a current engagement length L of the tool (2) in the circumferential direction on the workpiece (4) and an engagement length LG of the tool (2) in the circumferential direction on the workpiece (4) during machining of a straight portion (41) of the workpiece (4) according to the formula E = L/LG,

      - wherein the control unit (10) is configured to perform the compensation of the deflection of the tool (2) during machining by means of an adjustment of the relative speed FB between the tool (2) and the workpiece (4), or
   - wherein the control unit (10) is configured to perform the compensation of the deflection of the tool (2) during machining by means of a correction of a tool path (7).

2. Method according to claim 1, wherein the speed (FB) of the contact point (6), during the machining of an external radius (42) of the workpiece (4), is calculated

      a) using the formula

$$FB = FB0 + FK \cdot E^k$$

      with the dimension E as the ratio of the tool radius R1 to the radius of curvature R2, wherein FB0 is a value for the speed of the contact point (6) on the straight portion (41), FK is a first correction constant, and k is a second correction constant, and/or is calculated
      b) using the formula

$$FB = FB0 + FK \cdot (1 - E)^k$$

      with the dimension E as the ratio of the current engagement length L to the engagement length LG on the straight portion (41), wherein FB0 is a value for the speed of the contact point (6) on the straight portion (41), FK is a first correction constant, and k is a second correction constant.

3. Method according to claim 1, wherein the speed (FB) of the contact point (6), during the machining of an internal radius (43) of the workpiece (4), is calculated

      a) using the formula

$$FB = FB0 - FK \cdot E^k$$

      with the dimension E as the ratio of the tool radius R1 to the radius of curvature R2, wherein FB0 is a value for the speed of the contact point (6) on the straight portion (41), FK is a first correction constant, and k is a second correction constant, and/or is calculated
      b) using the formula

$$FB = FB0 - FK \cdot (E - 1)^k$$

      with the dimension E as the ratio of the current engagement length L to the engagement length LG on the straight portion (41), wherein FB0 is a value for the speed of the contact point (6) on the straight portion (41), FK is a first correction constant, and k is a second correction constant.

4. Method according to claim 1, wherein a correction value S for the tool path (7) during machining of an external radius (42) is calculated

   a) using the formula

   $$S = SG - SR \cdot E^k$$

   with the dimension E as the ratio of the tool radius R1 to the radius of curvature R2, wherein SG is the correction value for the tool path (7) on straight portions (41) of the workpiece (4), SR is a first correction constant, and k is a second correction constant, and/or is calculated
   b) using the formula

   $$S = SG - SR \cdot (1 - E)^k$$

   with the dimension E as the ratio of the current engagement length L to the engagement length LG on the straight portion (41), wherein SG is a correction value for the tool path (7) on straight portions (41) of the workpiece (4), SR is a first correction constant, and k is a second correction constant.

5. Method according to either claim 1 or claim 4, wherein a correction value S for the tool path (7) during machining of an internal radius (43) is calculated

   a) using the formula

   $$S = SG + SR \cdot E^k$$

   with the dimension E as the ratio of the tool radius R1 to the radius of curvature R2, wherein SG is the correction value for the tool path on straight portions (41) of the workpiece (4), SR is a first correction constant, and k is a second correction constant, and/or is calculated
   b) using the formula

   $$S = SG + SR \cdot (E - 1)^k$$

   with the dimension E as the ratio of the current engagement length L to the engagement length LG on the straight portion, wherein SG is a correction value for the tool path (7) on straight portions (41) of the workpiece (4), SR is a first correction constant, and k is a second correction constant.

6. Method according to any of the preceding claims, wherein the control unit (10) is configured to take into account, during the compensation of the deflection of a tool (2), a course of the workpiece surface which is still to be machined by the tool (2).

7. Method according to claim 6, wherein the control unit (10) is configured to determine transition points (8) at which a geometry of the workpiece surface change from a straight portion (41) into a curved portion (42, 43) and vice versa, or the curvature of a curved portion (42, 43) changes, and to begin a continuous change in the compensation prior to reaching a transition point (8) through the contact point (6), such that the speed FB and/or the correction value S for the portion behind the transition point (8) is reached in the transition point (8), and jump-like changes in the speed FB or the correction value S are prevented.

8. Method according to any of the preceding claims, wherein the control unit (10) is further configured to perform the compensation of the deflection of the tool (2) taking into account the length of the tool (2) in the axial direction of the tool (2), and/or to perform the compensation of the deflection of the tool (2) taking into account a geometry of the tool shaft (20) of the tool (2), and/or
   to perform the compensation of the deflection of the tool (2) taking into account an axial engagement length of the tool (2) on the workpiece (4) in the axial direction of the tool (2).

9. Method according to any of the preceding claims, wherein the correction constants are dependent on the type of the tool (2), the quality of the cutting edge, a material and a granulation of the tool (2), the oversize (40) of the workpiece (4), the rotational speed of the tool (2), the speed of the contact point (6), and/or the material of the workpiece (4).

10. Method according to any of claims 2 to 9, wherein the control unit (10) comprises a memory, in which values for the correction constants are stored, wherein the values for the correction constants are adjusted continuously, in particular by means of a learning system of the control unit (10).

11. Method according to any of the preceding claims, wherein the thickness D of the oversize (40) of the workpiece (4) is measured at any number of locations on the workpiece (4) prior to the final machining.

12. Method according to any of the preceding claims, wherein, when the dimension E is calculated as the ratio of the tool radius R1 to the radius of curvature R2 of the workpiece (4), the control unit (10) is configured to take into account a thickness D of the oversize (40) for the compensation of the deflection, or wherein the control unit (10) is configured to take into account the thickness D of the oversize (40) for calculating the current engagement length L of the tool (2).

13. Machine tool (1) which is configured to carry out a method according to any of the preceding claims.

## Revendications

1. Procédé de compensation d'une déviation d'un outil (2) lors d'un usinage d'une pièce (4) avec une machine-outil (1),

   - dans lequel une unité de commande (10) de la machine-outil (1) compense différemment la compensation de la déviation en fonction d'une cote E de rapports d'engagement dans un point de contact (6) entre l'outil (2) et la pièce (4) sur des sections droites (41) et sur des sections courbes (42, 43),

   a) sur la base d'un rapport entre un rayon d'outil R1 et un rayon de courbure R2 de la pièce (4) selon la formule

   $$E = R1/R2$$

   et/ou
   b) sur la base d'un rapport entre une longueur d'engagement actuelle L de l'outil (2) dans la direction circonférentielle sur la pièce (4) et une longueur d'engagement LG de l'outil (2) dans la direction circonférentielle de la pièce (4) lors de l'usinage d'une section droite (41) sur la pièce (4) selon la formule E = L/LG,

   - dans lequel l'unité de commande (10) est conçue pour effectuer la compensation de la déviation de l'outil (2) lors de l'usinage par un ajustement d'une vitesse relative FB entre l'outil (2) et la pièce (4) ou
   - dans lequel l'unité de commande (10) est conçue pour effectuer la compensation de la déviation de l'outil (2) lors de l'usinage par une correction d'une trajectoire d'outil (7).

2. Procédé selon la revendication 1, dans lequel la vitesse (FB) du point de contact (6) lors de l'usinage d'un rayon extérieur (42) de la pièce (4) est calculée

   a) au moyen de la formule

   $$FB = FB0 + FK \cdot E^k$$

avec la cote E comme le rapport entre le rayon d'outil R1 et le rayon de courbure R2, dans lequel FB0 est une valeur pour la vitesse du point de contact (6) sur la section droite (41), FK est une première constante de correction et k une seconde constante de correction et/ou
b) au moyen de la formule

$$FB = FB0 + FK \cdot (1 - E)^k$$

avec la cote E comme le rapport entre la longueur d'engagement actuelle L et la longueur d'engagement LG sur la section droite (41), dans lequel FB0 est une valeur pour la vitesse du point de contact (6) sur la section droite (41), FK est une première constante de correction et k une seconde constante de correction.

3. Procédé selon la revendication 1, dans lequel la vitesse FB du point de contact (6) lors de l'usinage d'un rayon intérieur (43) de la pièce (4) est calculée

   a) au moyen de la formule

   $$FB = FB0 - FK \cdot E^k$$

   avec la cote E comme le rapport entre le rayon d'outil R1 et le rayon de courbure R2, dans lequel FB0 est une valeur pour la vitesse du point de contact (6) sur la section droite (41), FK est une première constante de correction et k une seconde constante de correction et/ou
   b) au moyen de la formule

   $$FB = FB0 - FK \cdot (E - 1)^k$$

   avec la cote E comme le rapport entre la longueur d'engagement actuelle L et la longueur d'engagement LG sur la section droite (41), dans lequel FB0 est une valeur pour la vitesse du point de contact (6) sur la section droite (41), FK est une première constante de correction et k une seconde constante de correction.

4. Procédé selon la revendication 1, dans lequel une valeur de correction S pour la trajectoire d'outil (7) lors de l'usinage d'un rayon extérieur (42) est calculée

   a) au moyen de la formule

   $$S = SG - SR \cdot E^k$$

   avec la cote E comme le rapport entre le rayon d'outil R1 et le rayon de courbure R2, dans lequel SG est la valeur de correction pour la trajectoire d'outil (7) sur des sections droites (41) de la pièce (4), SR est une première constante de correction et k est une seconde constante de correction, et/ou

b) au moyen de la formule

$$S = SG - SR \cdot (1 - E)^k$$

avec la cote E comme le rapport entre la longueur d'engagement actuelle L et la longueur d'engagement LG sur la section droite (41), dans lequel SG est une valeur de correction pour la trajectoire d'outil (7) sur des sections droites (41) de la pièce (4), SR est une première constante de correction et k est une seconde constante de correction.

5. Procédé selon la revendication 1 ou 4, dans lequel une valeur de correction S pour la trajectoire d'outil (7) lors de l'usinage d'un rayon intérieur (43) est calculée

   a) au moyen de la formule

$$S = SG + SR \cdot E^k$$

   avec la cote E comme le rapport entre le rayon d'outil R1 et le rayon de courbure R2, dans lequel SG est une valeur de correction pour la trajectoire d'outil sur des sections droites (41) de la pièce (4), SR est une première constante de correction et k est une seconde constante de correction, et/ou

   b) au moyen de la formule

$$S = SG + SR \cdot (E - 1)^k$$

   avec la cote E comme le rapport entre la longueur d'engrènement actuelle L et la longueur d'engrènement LG sur la section droite, dans lequel SG est une valeur de correction pour la trajectoire d'outil (7) sur des sections droites (41) de la pièce (4), SR est une première constante de correction et k est une seconde constante de correction.

6. Procédé selon l'une quelconque des revendications précédentes, dans lequel l'unité de commande (10) est conçue pour prendre en compte, lors de la compensation de la déviation d'un outil (2), un tracé de la surface de la pièce qui doit encore être usinée par l'outil (2).

7. Procédé selon la revendication 6, dans lequel l'unité de commande (10) est conçue pour déterminer des points de transition (8) où une géométrie de la surface de la pièce passe à partir d'une section droite (41) dans une section courbe (42, 43) et inversement ou la courbure d'une section courbe (42, 43) change, et pour commencer une modification continue de la compensation avant d'atteindre un point de transition (8) par le point de contact (6), de sorte que la vitesse FB et/ou la valeur de correction S pour la section située derrière le point de transition (8) soit atteinte dans le point de transition (8) et des variations brusques de la vitesse FB ou de la valeur de correction S sont évitées.

8. Procédé selon l'une quelconque des revendications précédentes, dans lequel l'unité de commande (10) est en outre conçue pour effectuer la compensation de la déviation de l'outil (2) avec prise en compte d'une longueur de l'outil (2) dans la direction axiale de l'outil (2) et/ou

   pour effectuer la compensation de la déviation de l'outil (2) avec prise en compte d'une géométrie de la tige d'outil (20) de l'outil (2) et/ou pour prendre en compte la compensation de la déviation de l'outil (2) avec prise en compte d'une longueur d'engagement axial de l'outil (2) sur la pièce (4) dans la direction axiale de l'outil (2).

9. Procédé selon l'une quelconque des revendications précédentes, dans lequel les constantes de correction dépendent du type d'outil (2), de la nature des arêtes de coupe, d'un matériau et d'une granulation de l'outil (2), de la surépaisseur (40) de la pièce (4), de la vitesse de rotation de l'outil (2), de la vitesse du point de contact (6) et/ou du matériau de la pièce (4).

10. Procédé selon l'une quelconque des revendications 2 à 9, dans lequel l'unité de commande (10) présente une mémoire dans laquelle sont enregistrées des valeurs pour les constantes de correction, dans lequel les valeurs pour les constantes de correction sont en particulier adaptées en continu au moyen d'un système d'apprentissage de l'unité de commande (10).

11. Procédé selon l'une quelconque des revendications précédentes, dans lequel l'épaisseur D de la surépaisseur (40) de la pièce (4) est mesurée à plusieurs endroits sur la pièce (4) avant l'usinage final.

12. Procédé selon l'une quelconque des revendications précédentes, dans lequel, lorsque la cote E est calculée comme le rapport entre le rayon d'outil R1 et le rayon de courbure R2 de la pièce (4), l'unité de commande (10) est conçue pour prendre en compte une épaisseur D de la surépaisseur (40) pour compenser la déviation ou dans lequel l'unité de commande (10) est conçue pour prendre en compte l'épaisseur D de la surépaisseur (40) pour un calcul de la longueur d'engagement L actuelle de l'outil (2).

13. Machine-outil (1), laquelle est conçue pour mettre en œuvre un procédé selon l'une quelconque des revendications précédentes.

Fig. 1

# Fig. 2

# Fig. 3

# Fig. 4

# Fig. 5

## Fig. 6

## Fig. 7

$$S = SG - SR \cdot E^k$$

# Fig. 8

$$S = SG + SR \cdot E^k$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020131696 A1
- DE 112019002459 T5